# EUROPÄISCHE PATENTANMELDUNG

(11) **EP 2 015 119 A1**
(43) Veröffentlichungstag der Anmeldung: **14.01.2009**
(21) Anmeldenummer: 08104641.9
(22) Anmeldetag: 04.07.2008
(51) Int. Cl.: G02B 6/44

(54) **Verteiler zum Aufteilen eines Kabels mit einer Schar von Bündeladern in einzelne Lichtwellenleiter**

(30) Priorität: 09.07.2007 WO PCT/DE2007/009589
(71) Anmelder: Diamond Gmbh, 70771 Leinfelden-Echterdingen (DE)
(72) Erfinder: Kohl, Andreas, 70191 Stuttgart (DE)
(74) Vertreter: Wenger, René

(57) **Zusammenfassung**

Ein Verteiler zum Aufteilen eines Kabels (3) mit Bündeladern in einzelne Lichtwellenleiter verfügt über ein Schrankgehäuse (4), in dem herausziehbare und/oder herausnehmbare Schubladen (5) angeordnet sind. An den Stirnseiten (15) der Schubladen (5) sind Ausgänge (7) angeordnet, über den wenigstens ein Lichtwellenleiter des Kabels (3) mit der Bündeladerschar vom Verteiler weggeführt ist. Jeweils eine Bündelader (2a) ist zu einer Schublade (5) herangeführt, wobei in der Schublade (5) ein Aufteilelement (9) zum Aufteilen der Bündelader (2a) in einzelne Lichtwellenleiter in Form von Kabelpeitschen (8) vorgesehen ist. An der Schublade (5) sind Tragelemente (14) zum lösbaren Festhalten der Kabelpeitschen (8) zum geordneten Lagern von Überlängen der Kabelpeitschen (8) angeordnet. Die Bündeladern (2a, 2b) sind in zwei Abschnitte aufgeteilt, wobei die Bündeladern (2a) des ersten Abschnitts in einem Gehäusefach (18) abgelegt und der zweite Abschnitt (2b) zur jeweiligen Schublade (5) herangeführt ist.

## Beschreibung

Die Erfindung betrifft einen Verteiler zum Aufteilen eines Kabels mit einer Schar von Bündeladern in einzelne Lichtwellenleiter gemäss dem Oberbegriff von Anspruch 1. Mit derartigen Verteilern kann eine Feinverteilung zu den jeweiligen Verbrauchern erreicht werden. Der Verteiler eignet sich insbesondere für den Anwendungsbereich "Fiber to the Home". Als "Fiber to the Home" (abgekürzt: "FTTH") bezeichnet man beispielsweise in der Telekommunikation das Verlegen von Lichtwellenleitern bis in die Wohnung eines Endkonsumenten. Selbstverständlich eignet sich das Verfahren auch für andere Anwendungsgebiete, die z.B. unter den Abkürzungen FTTL, FTTC, FTTN oder FTTB bekannt sind.

Ein gattungsmässig vergleichbarer Verteiler ist beispielsweise aus der DE 200 11 664 U1 bekannt geworden. Ein Verteilersystem für optische Kabel ist weiterhin in der DE 201 02 260 U1 beschrieben. Beim Umgang mit den bekannten Verteilern hat sich in der Praxis gezeigt, dass sie hinsichtlich Handhabung und Installationsfreundlichkeit ungünstig sein können.

Es ist deshalb eine Aufgabe der vorliegenden Erfindung, die Nachteile des Bekannten zu vermeiden und insbesondere einen Verteiler zu schaffen, der sich durch eine verbesserte Handhabung und Installationsfreundlichkeit auszeichnet. Diese Aufgabe wird mit einem Verteiler mit den Merkmalen von Anspruch 1 gelöst.

Der Verteiler eignet sich insbesondere als Verteiler zum Herstellen von optischen Steckverbindungen zwischen Lichtwellenleitern. Vom Ausgang weggeführte Lichtwellenleiter können mit Steckerteilen je nach Bedarf konfektioniert werden. Selbstverständlich wäre es alternativ auch denkbar, beispielsweise unter Verwendung einer "Fusion-Technologie" die Lichtwellenleiter des Übertragungssystems direkt miteinander zu verbinden. Die Schar von Bündeladern (abgekürzt: Bündeladerschar) kann in einem Kabelmantel des Kabels zusammengefasst sein. Dieses Kabel ist an den Eingang im Schrankgehäuse an den Verteiler herangeführt. Die aufgeteilten Lichtwellenleiter des Kabels können schliesslich über einen Ausgang, vorzugsweise mehrere Ausgänge vom Verteiler weggeführt sein.

Der erfindungsgemässe Verteiler zeichnet sich dadurch aus, dass jeweils eine Bündelader zu einer Schublade herangeführt oder hineingeführt ist und dass im Schrankgehäuse ein Aufteilelement zum Aufteilen der Bündelader in einzelne Lichtwellenleiter in Form von Kabelpeitschen vorgesehen ist. Der Verteiler kann vorzugsweise mehrere Schubladen aufweisen, die jeweils mit mehreren Ausgängen bestückt sein können. An der wenigstens einen Schublade ist eine Speicheranordnung zum geordneten Lagern von Überlängen der Kabelpeitschen angeordnet, wobei jeweils das freie Ende der Kabelpeitschen durch den wenigstens einen Ausgang durchführbar oder durchgeführt ist und bis zur Überlänge herausziehbar ist. Diese Verteileranordnung hat den Vorteil, dass sie einfach in der Handhabung ist und sich durch eine hohe Installationsfreundlichkeit auszeichnet.

In einer ersten Ausführungsform kann das Aufteilelement an der Schublade angeordnet sein. Selbstverständlich wäre es grundsätzlich auch denkbar, das Aufteilelement in einem anderen Bereich oder einem anderen Fach im Schrankgehäuse anzuordnen.

Vorteilhaft kann es weiter sein, wenn die Speicheranordnung wenigstens ein Tragelement, vorzugsweise wenigstens zwei und besonders bevorzugt wenigstens drei Tragelemente zum lösbaren Festhalten der Kabelpeitschen enthält. Die Tragelemente können dabei vorzugsweise mit einem Klettverschluss versehen sein. Eine solche Ausgestaltung ermöglicht bei Bedarf ein einfaches Entwinden der Kabelpeitschen von den Tragelementen.

Zum wenigstens teilweisen Bilden der Stirnseite kann die wenigstens eine Schublade eine Frontplatte aufweisen. Die Schublade oder die Schubladen kann bzw. können jeweils eine Trägerplatte aufweisen, die rechtwinklig an der Frontplatte anschliesst, wobei an jeder Trägerplatte ein Aufteilelement und eine Speicheranordnung befestigt ist. Besonders vorteilhaft kann es sein, wenn die Trägerplatte und die Frontplatte in einer Draufsicht ein T-förmiges Profil bilden und wenn zum Ausziehen der Schublade am Schrankgehäuse, insbesondere am Einbaurahmen des Schrankgehäuses Führungsmittel angeordnet sind, in die die Trägerplatte randseitig aufnehmbar oder aufgenommen ist. Mit dieser Anordnung ist eine besonders einfach herstellbare Schublade geschaffen, die auf vorteilhafte Art und Weise aus dem Schrankgehäuse herausziehbar ist.

Die Bündeladern können in zwei aneinander anschliessende Abschnitte aufgeteilt sein. Dabei kann ein erster Abschnitt der Bündelader in einem gegenüber den Schubladen separaten Gehäusefach abgelegt oder ablegbar sein und ein diesem folgender zweiter Abschnitt der Bündeladern kann schliesslich zu einer jeweiligen Schublade herangeführt oder heranführbar sein. Bevorzugt können dabei die Bündeladern beider Abschnitte aus Reparaturgründen etwa gleich lang ausgebildet sein. Die Längen entsprechen dabei vorteilhaft der Summe der später gewünschten Länge einer Verbinderleitung zum Verbraucher und einer systembedingten Zusatzlänge.

Das Gehäuse zur Ablage des ersten Abschnitts der Bündeladern kann durch eine Seitenwand des Schrankgehäuses gebildet sein, die rechtwinklig zur Stirnseite verläuft. Bevorzugt kann dabei die Seitenwand um eine Schwenkachse aufklappbar am Schrankgehäuse gelagert sein. Die Schwenkachse kann weiterhin auf einer der Stirnseite gegenüberliegenden Rückseite des Schrankgehäuses liegen. Selbstverständlich wäre es auch vorstellbar, dieses Gehäusefach - statt unter Verwendung der beschriebenen Seitenwand - auf andere Weise auszubilden.

An der Seitenwand kann ein rechtwinklig zu dieser verlaufender Stirnwandabschnitt anschliessen, der in einer Endlage, insbesondere in einer eingeklappten Lage, zusammen mit der wenigstens einen Frontplatte die Stirnseite des Schrankgehäuses bilden kann.

Das Aufteilelement kann eine vorzugsweise hohlzylindrische Hülse aus Metall oder einem anderen Werkstoff aufweisen. Die Hülse kann ausgangsseitig durch eine Lochscheibe zum Hindurchführen einzelner Kabelpeitschen abgeschlossen sein. Eine derartige Lochscheibe kann eine Vielzahl von Durchgangslöchern für die Kabelpeitschen aufweisen.

Weitere Vorteile und Einzelmerkmale der Erfindung ergeben sich aus den Zeichnungen und aus der nachfolgenden Beschreibung zweier Ausführungsbeispielen. Es zeigen:
- Figur 1: eine perspektivische Darstellung eines erfindungsgemässen Verteilers mit einer ausgeklappten Seitenwand,
- Figur 2: eine Ansicht des Verteilers gemäss Figur 1 aus einem anderen Blickwinkel mit einer teilweise herausgezogenen Schublade,
- Figur 3: der Verteiler gemäss Figur 2 in einer Rückansicht,
- Figur 4: eine Schublade des Verteilers,
- Figur 4a: eine vergrösserte Darstellung eines Aufteilelements,
- Figur 5: einen Verteiler gemäss einer zweiten Ausführungsform, bestehend aus zwei Gehäuseteilen,
- Figur 6: eine Darstellung eines der Gehäuseteile des Verteilers gemäss Figur 5,
- Figur 7: das zweite Gehäuseteil für den Verteiler gemäss Figur 5, und
- Figur 8: eine Explosionsdarstellung des Gehäuseteils gemäss Figur 7.

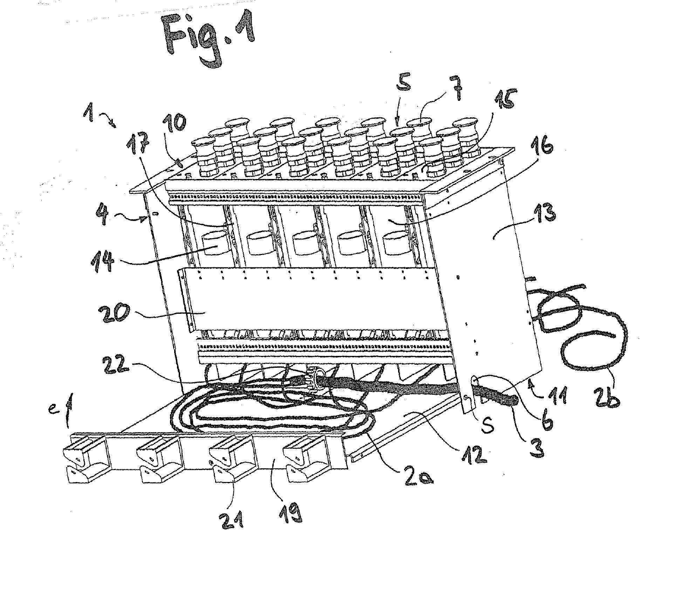

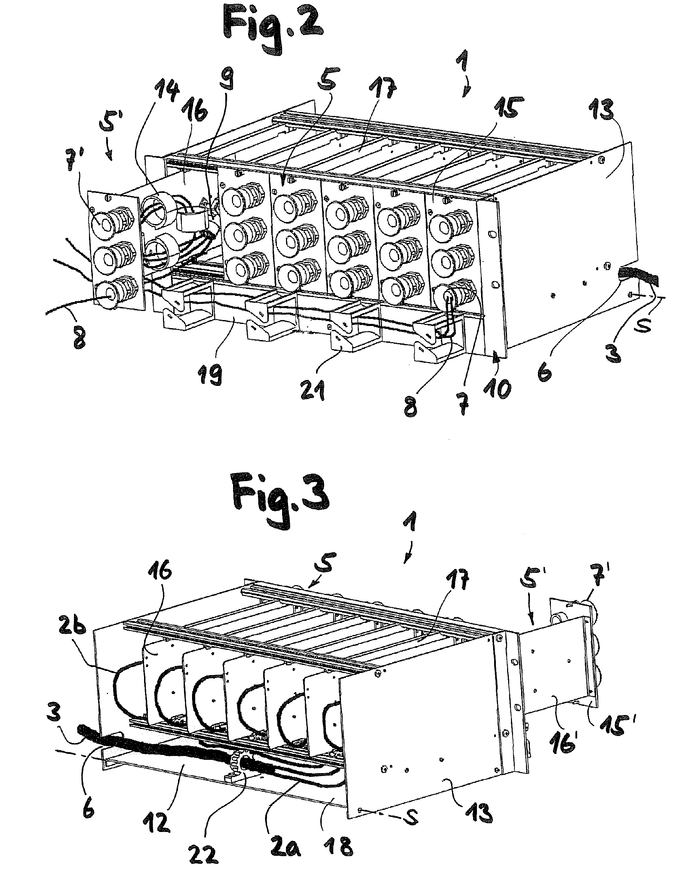

Figur 1 zeigt eine erste Ausführungsform eines mit 1 bezeichneten Verteilers zum Aufteilen eines Kabels mit einer Bündeladerschar in einzelne Lichtwellenleiter. Diese Bündeladerschar wird im Kabel 3 an den Verteiler 1 herangeführt. Der Verteiler 1 weist eine Vielzahl von Ausgängen 7 auf, wobei jeweils drei Ausgänge 7 auf eine Schublade 5 zugeordnet sind. Der Verteiler 1 befindet sich in Figur 1 in einem vormontierten Zustand, in dem die Leitungsführung noch nicht abgeschlossen ist. Die Lichtwellenleiter der Bündeladern 2b sind daher noch nicht zu den Schubladen 5 mit den Ausgängen 7 geführt. Die Leitungsführung, die sich insbesondere für FTTH-Anwendungen eignet, ist nachfolgend anhand der Figuren 2 bis 4 ausführlich beschrieben.

Derartige Verteiler können alleine einen Verteilerschrank bilden. Je nach Anwendungszweck kann der Verteiler 1 in einem Schrank mit weiteren optischen Installationen eingebaut sein. Der Verteiler kann weiterhin auch ein Modul bilden, das zusammen mit weiteren Modulen (gleichen oder ähnlichen) eine Verteilereinheit bilden könnte.

Das durch einen Eingang 6 in einer Querseitenwand 13 geführte Kabel 3 ist ersichtlicherweise mittels eines ringförmigen Halteteils 22 an einer Seitenwand 12 des Schrankgehäuses 4 gehalten. Kurz nach dem Halteteil 22 sind die Bündeladern des Kabels 3 freigelegt. Die Bündeladern sind ersichtlicherweise in der Seitenwand 12 in Schlaufen oder Wicklungen abgelegt. Dieser erste Abschnitt der Bündeladern wird mit 2a bezeichnet. Der an diesen Abschnitt anschliessende zweite Abschnitt wird mit 2b bezeichnet.

An der Seitenwand 12 schliesst ein rechtwinklig zu dieser verlaufender Stirnwandabschnitt 19 an, an dem Halteelemente 21 auf der Aussenseite angeordnet sind. Die Seitenwand 12 kann zusammen mit dem Stirnwandabschnitt 19 in e-Richtung um die Schwenkachse S eingeklappt und in einer Endlage arretiert werden. Eine solche Endlage ist in den Figuren 2 und 3 dargestellt.

Wie aus Figur 2 hervorgeht, sind die Schubladen 5 herausziehbar ausgestaltet. Eine teilweise herausgezogene Schublade ist mit 5' gekennzeichnet. Zum Herausziehen der Schubladen sind am Einbaurahmen 20 angebrachte Führungsmittel 17 vorgesehen, die eine Führungskulisse für die Trägerplatte 16 der Schubladen 7 bilden. Bei der ausgezogenen Schublade 5' ist weiterhin ein Aufteilelement 9 erkennbar, welches die Bündeladern 2b in einzelne Leitungen 8 mit Lichtwellenleitern aufteilt. Eine einzelne Leitung 8 ist beispielhaft durch einen Ausgang 7' aus dem Verteiler 1 weggeführt. Die übrigen Leitungen 8 sind ersichtlicherweise in einer Überlänge mittels einer Speicheranordnung geordnet in der Schublade 5' gelagert. Hierzu dienen Tragelemente 14, mit denen eine geordnete Lagerung in Form von Schlaufen oder Wicklungen ermöglicht ist. Das vorliegende Verteilersystem zeichnet sich insbesondere dadurch aus, dass bis zum Verbraucher oder zumindest bis in die Nähe eines Verbrauchers eine schnittstellenlose Leitungsführung möglich ist. Diese Schubladen erlauben ersichtlicherweise ein Leitungsmanagement. In Figur 2 ist weiterhin erkennbar, dass der Stirnwandabschnitt 19 zusammen mit den Frontplatten 15 die Stirnseite 10 des Schrankgehäuses 4 bildet.

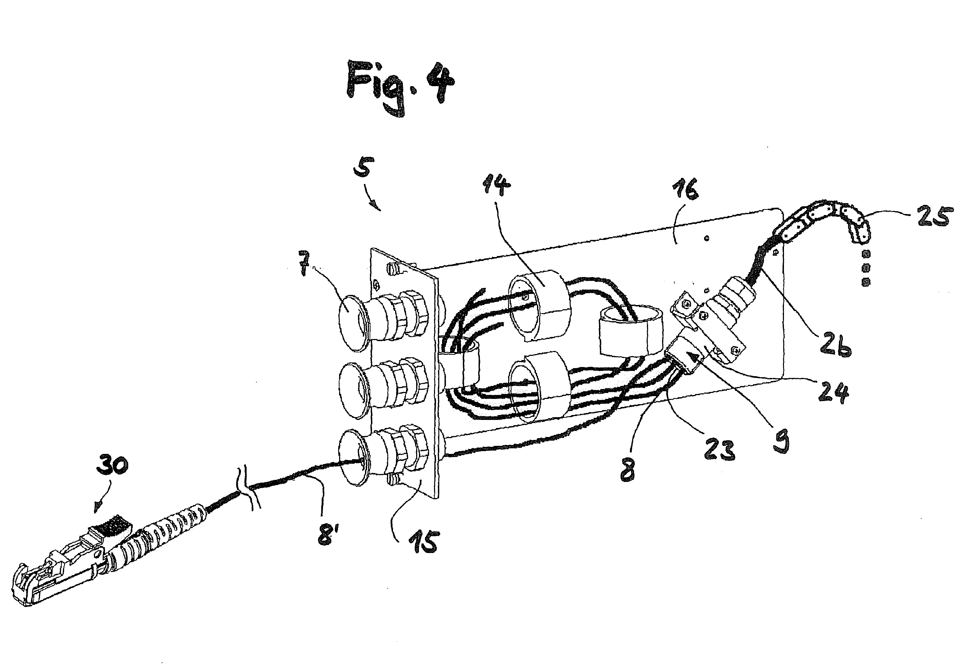

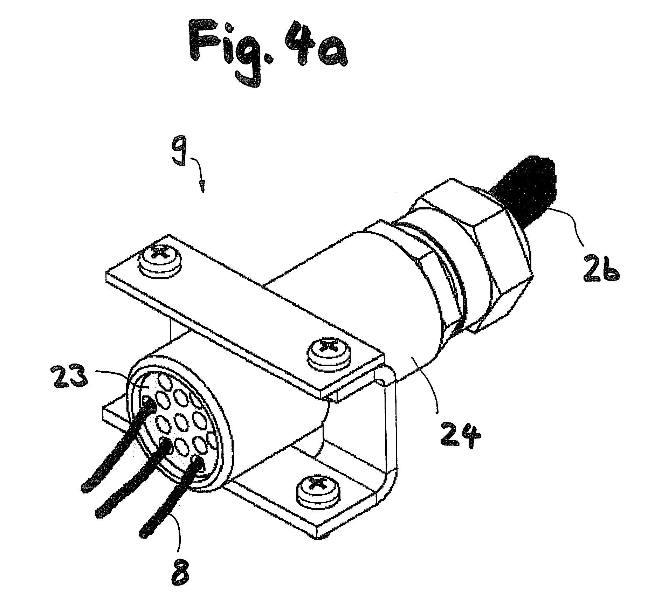

Wie aus Figur 3 hervorgeht, legt die Seitenwand 12 ein Gehäusefach 18 fest, das zwischen der Seitenwand und den darüber liegenden Schubladen 5 liegt. Weiterhin ist erkennbar, dass der zweite Abschnitt 2b der Bündeladern über einen hinteren Teil der Schubladen zu (hier dem Betrachter verdeckten) Aufteilelementen herangeführt ist. Die Leitungsführung im Bereich einer Schublade 5 ist nachfolgend in Figur 4 detailliert gezeigt.

Eine einzelne Bündelader 2b ist an das Aufteilelement 9 herangeführt. Ersichtlicherweise ist dabei die Bündelader 2b wenigstens in einem Teilabschnitt mit einer Schleppkette 25 versehen (Fig. 4). Derartige Schleppketten sind dem Fachmann beispielsweise aus der DE 200 11 663 U1 bekannt. Nach Aufteilung der Bündelader 2b mittels der Aufteilelemente 9 in die Leitungen 8 sind diese vor ihrer Verwendung für einen Anschluss zu einem Verbraucher in Schlaufen in der Schublade abgelegt. Zum Fixieren dienen vier Tragelemente 14, die sich dank Klettverschlüssen einfach öffnen lassen. In Figur 4 ist eine Kabelpeitsche 8' erkennbar, die von der Speicheranordnung entwunden und über einen Ausgang 7 weggeführt wurde. Diese Kabelpeitsche 8' ist beispielhaft mit einem unter der Bezeichnung "E-2000^{™} Fusion" bekannten Steckerteil 30 unter Verwendung eines Schweiss-Verfahrens konfektioniert. Ein derartiges Steckerteil und ein entsprechende Verfahren zum Anbringen dieses Steckerteils an einen Lichtwellenleiter (i.c. der Kabelpeitsche) ist in der WO 2004/001471 beschrieben.

In den in Leitungen 8 sind einzelne Lichtwellenleiter angeordnet. Die Leitungen 8 können Kabelpeitschen sein, in denen die Lichtwellenleiter aufnehmbar sind. Die Bündelader 2b enthält z.B. zwölf Lichtwellenleiter, wodurch sich folglich zwölf Kabelpeitschen bzw. zwölf Leitungen 8 ergeben (vgl. Fig. 4a). Lediglich aus darstellerischen Gründen sind in Figur 4 (sowie in den übrigen Figuren) lediglich drei Kabelpeitschen 8 gezeigt.

Das Aufteilelement 9 ist mittels Schrauben an die Trägerplatte 16 der Schublade 5 angeschraubt. Stirnseitig schliesst an die Trägerplatte 16 rechtwinklig eine Frontplatte 15 an, die mittels Schlitzschrauben mit der Frontplatte verbunden ist.

Figur 4a zeigt das Aufteilelement 9 in vergrösserter Darstellung. Es enthält eine hohlzylindrische Hülse 24, die im Bereich ihrer Vorderseite durch eine Lochscheibe 23 abgeschlossen ist. Die Lochscheibe 23 enthält eine Mehrzahl von Durchgangslöchern, durch die die Kabelpeitschen 8 hindurchgeführt oder hindurchführbar sind.

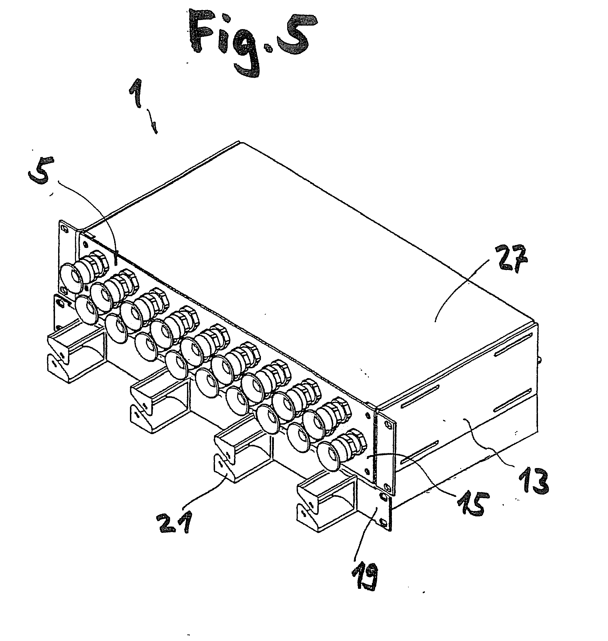

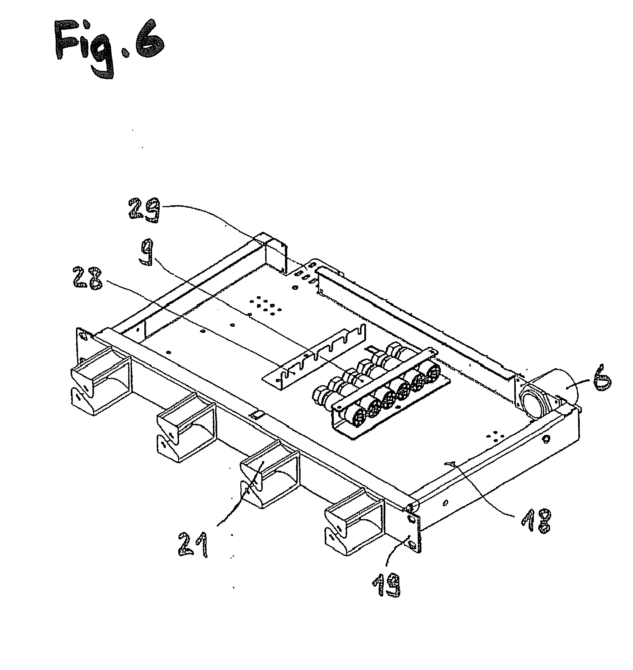

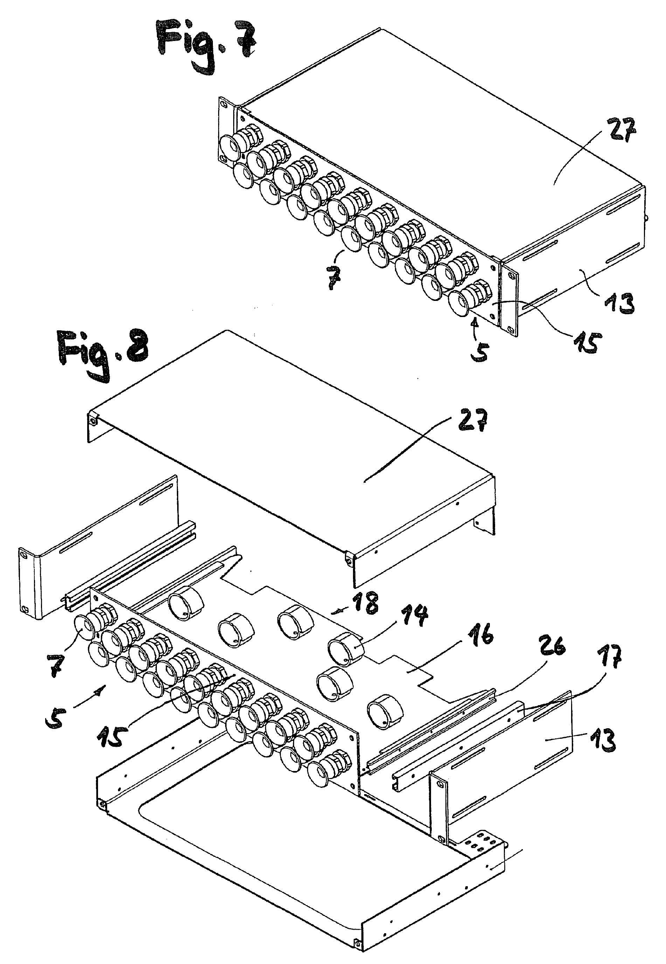

Die Figuren 5 bis 8 zeigen eine alternative Ausführungsform für einen Verteiler. Die in Figur 6 und Figur 7 gezeigten Gehäuseteile sind zusammensetzbar und bilden gemeinsam einen Verteiler (Fig. 5). Im Gegensatz zur vorgängigen Ausführungsform sind die Aufteilelemente nicht in der Schublade, sondern in einem separaten Gehäusefach 18 abgelegt. Das Gehäuseteil gemäss Figur 7 weist eine einzige Schublade 5 mit 18 Ausgängen 7 auf. Die Ausgänge sind an einer Frontplatte 15 angebracht, an die eine Trägerplatte 16 anschliesst (Fig. 8). An der Trägerplatte 16 sind sechs Tragelemente 14 angeordnet, die drei Gruppen mit je zwei Tragelementen 14 für jeweils drei Wicklungen von Leitungen zum geordneten Lagern bilden. Figur 6 zeigt eine Durchführöffnung 29 durch welche (nicht gezeigte) Leitungen durchführbar sind. Figur 8 zeigt, dass das Gehäuseteil mit der Schublade 5 über einen oberen Gehäusedeckel 27 verfügt. Der diesem Gehäusedeckel 27 gegenüberliegende Gehäusedeckel ist ersichtlicherweise nach unten durch einen Rahmen offen ausgebildet.

## Patentansprüche

1. Verteiler zum Aufteilen eines Kabels mit einer Schar (3) von Bündeladern (2) in einzelne Lichtwellenleiter, insbesondere Verteiler zum Herstellen von optischen Steckverbindungen zwischen Lichtwellenleitern, mit einem Schrankgehäuse (4), in dem wenigstens eine von einer Stirnseite (10) herausziehbare und/oder herausnehmbare Schublade (5) angeordnet ist, mit wenigstens einem Eingang (6) im Schrankgehäuse (4), über welchen das Kabel mit der Schar (3) von Bündeladern (2) mit den Lichtwellenleitern an den Verteiler herangeführt ist und mit wenigstens einem an der Stirnseite (15) der Schublade (5) angeordneten Ausgang (7), über den wenigstens ein Lichtwellenleiter der Bündeladerschar (3) vom Verteiler weggeführt ist, **dadurch gekennzeichnet, dass** jeweils eine Bündelader (2a) zu einer Schublade (5) herangeführt ist und dass im Schrankgehäuse (4) ein Aufteilelement (9) zum Aufteilen der Bündelader (2a) in einzelne Lichtwellenleiter in Form von Kabelpeitschen (8) vorgesehen ist und dass an der Schublade (5) eine Speicheranordnung zum geordneten Lagern von Überlängen der Kabelpeitschen (8) angeordnet ist, wobei jeweils das freie Ende der Kabelpeitschen (8) durch den wenigstens einen Ausgang (7) durchführbar oder durchgeführt ist und bis zur Überlänge herausziehbar ist.

2. Verteiler nach Anspruch 1, **dadurch gekennzeichnet, dass** das Aufteilelement (9) an der Schublade (5) angeordnet ist.

3. Verteiler nach Anspruch 1 oder 2, **dadurch gekennzeichnet, dass** die Speicheranordnung wenigstens ein Tragelement (14), vorzugsweise wenigstens zwei und besonders bevorzugt wenigstens drei Tragelemente (14) zum lösbaren Festhalten der Kabelpeitschen (8) enthält.

4. Verteiler nach Anspruch 3, **dadurch gekennzeichnet, dass** zum lösbaren Festhalten der Kabelpeitschen (8) das wenigstens eine Tragelement (14) mit einem Klettverschluss versehen ist.

5. Verteiler nach einem der Ansprüche 1 bis 4, **dadurch gekennzeichnet, dass** zum wenigstens teilweisen Bilden der Stirnseite (10) die wenigstens eine Schublade (5) eine Frontplatte (15) aufweist.

6. Verteiler nach Anspruch 5, **dadurch gekennzeichnet, dass** die Schublade weiter eine Trägerplatte (16) aufweist, die rechtwinklig an der Frontplatte (15) anschliesst, wobei an jeder Trägerplatte (16) ein Aufteilelement (9) und eine Speicheranordnung befestigt ist.

7. Verteiler nach Anspruch 5, **dadurch gekennzeichnet, dass** die Trägerplatte (16) und die Frontplatte (15) in einer Draufsicht ein T-förmiges Profil bilden und dass zum Ausziehen der Schublade (5) am Einbaurahmen (20) Führungsmittel (17) angeordnet sind, in die die Trägerplatte (16) randseitig aufnehmbar oder aufgenommen ist.

8. Verteiler nach einem der Ansprüche 1 bis 7, **dadurch gekennzeichnet, dass** die Bündeladern (2a, 2b) in zwei Abschnitte aufgeteilt sind, wobei die Bündeladern (2a) eines ersten Abschnitts in einem gegenüber den Schubladen (5) separaten Gehäusefach (18) abgelegt oder ablegbar sind und in einem folgenden zweiten Abschnitt (2b) zur jeweiligen Schublade (5) herangeführt sind.

9. Verteiler nach Anspruch 8, **dadurch gekennzeichnet, dass** die Längen der Bündelladern (2a, 2b) beider Abschnitte etwa gleich lang sind.

10. Verteiler nach Anspruch 8 oder 9, **dadurch gekennzeichnet, dass** das Gehäusefach (18) durch eine Seitenwand (12) des Schrankgehäuses (4) gebildet ist, welche rechtwinklig zur Stirnseite (10) verläuft.

11. Verteiler nach Anspruch 10, **dadurch gekennzeichnet, dass** die Seitenwand (12) um eine Schwenkachse (S) aufklappbar am Schrankgehäuse (4) gelagert ist.

12. Verteiler nach Anspruch 11, **dadurch gekennzeichnet, dass** die Schwenkachse (S) auf einer der Stirnseite (10) gegenüberliegenden Rückseite (11) des Schrankgehäuses (4) liegt.

13. Verteiler nach einem der Ansprüche 10 bis 12, **dadurch gekennzeichnet, dass** an der Seitenwand (12) eine rechtwinklig zu dieser verlaufender Stirnwandabschnitt (19) anschliesst, die in einer Endlage, insbesondere in einer eingeklappten Lage zusammen mit der wenigstens einen Frontplatte (15) die Stirnseite des Schrankgehäuses (4) bildet.

14. Verteiler nach einem der Ansprüche 10 bis 13, **dadurch gekennzeichnet, dass** aussen am Stirnwandabschnitt (19) Halteelemente (21) zur Kabelführung von aus den Ausgängen (7) weggeführten Lichtwellenleitern (8) angeordnet sind.

15. Verteiler nach einem der Ansprüche 10 bis 14, **dadurch gekennzeichnet, dass** auf einer Innenseite der Seitenwand (22) ein Halteteil zum Fixieren des Kabels (3) und/oder Bündeladern (2a) angeordnet ist.

16. Verteiler nach einem der Ansprüche 1 bis 15, **dadurch gekennzeichnet, dass** das Aufteilelement (9) zum Hindurchführen einzelner Kabelpeitschen eine Lochscheibe (23) mit einer Vielzahl von Durchgangslöchern für die Kabelpeitschen (8) aufweist.
